Europäisches Patentamt

European Patent Office

Office européen des brevets

(19)

(11) Veröffentlichungsnummer: **0 103 736**
**A1**

(12) # EUROPÄISCHE PATENTANMELDUNG

(21) Anmeldenummer: **83107931.4**

(22) Anmeldetag: **11.08.83**

(51) Int. Cl.³: **C 23 C 3/00**
**C 22 C 38/14, C 23 F 1/00**
**C 23 F 17/00, B 22 F 1/02**
**B 32 B 15/02**

(30) Priorität: **18.09.82 DE 3234671**

(43) Veröffentlichungstag der Anmeldung:
**28.03.84 Patentblatt 84/13**

(84) Benannte Vertragsstaaten:
**AT BE CH FR GB IT LI LU NL SE**

(71) Anmelder: **DORNIER SYSTEM GmbH**
**Postfach 1360**
**D-7990 Friedrichshafen(DE)**

(72) Erfinder: **Schröder, Bernhard, Dr.**
**Dr. Zimmermann-Strasse 3a**
**D-7758 Meersburg(DE)**

(72) Erfinder: **Schröder, Hans-Wolfgang, Dr.**
**Kupferbergstrasse 27**
**D-7997 Immenstaad(DE)**

(72) Erfinder: **van Rensen, Enno, Dr.**
**Gebhardsweiler 17**
**D-7772 Uhldingen(DE)**

(74) Vertreter: **Landsmann, Ralf, Dipl.-Ing.**
**Kleeweg 3**
**D-7990 Friedrichshafen 1(DE)**

(54) **Verfahren zur Beschichtung von Wasserstoff-Speichermaterial mit Palladium.**

(57) Bei dem Verfahren zur Beschichtung von Wasserstoff-Speichermaterial mit Palladium wird das Wasserstoff-Speichermaterial (z.B. FeTi) an seiner Oberfläche zunächst entpassiviert und anschließend auf der entpassivierten Oberfläche durch Ionentausch eine dünne Palladiumschicht erzeugt bzw. aufgebracht.

EP 0 103 736 A1

DORNIER SYSTEM GMBH

7990 Friedrichshafen

Reg. S 430

Verfahren zur Beschichtung von Wasserstoff-Speichermaterial mit Palladium

Die Erfindung betrifft ein Verfahren zur Beschichtung von Wasserstoff-Speichermaterial mit Palladium (Pd).

Bei Metallen und Legierungen, wie beispielsweise bei Titan, Magnesium, Tantal, Eisen-Titan (FeTi) und der Lanthan-Nickel-Verbindung (LaNi$_5$) ist die Wasserstoffaufnahme aus der Gasphase meistens kinetisch gehemmt, das heisst, trotz negativer Werte für die Bildungsenthalpie des Metallhydrides findet keine Reaktion statt.

An der Metalloberfläche wird zunächst molekularer Wasserstoff physisorbiert, worauf die Dissoziation in atomaren Wasserstoff unter gleichzeitiger Chemisorption (dissoziative Chemisorption) erfolgt. Anschliessend durchdringt dann der atomare Wasserstoff die Oberfläche und wird - in den meisten Fällen - unter Abgabe eines Elektrons an das Leitungsband des Wirtsmetalls als Proton gelöst. Dann diffundiert der Wasserstoff von den oberflächennahen Bereichen, entsprechend dem Konzentrationsgradienten, weiter in das Innere des Metalls.

Während bei der Physisorption, Chemisorption und der protonischen Lösung Energie frei wird, verlangen die Diffusion, der Durchtritt durch die Metalloberfläche sowie insbesondere die Dissoziation des Wasserstoffmoleküls $H_2$ Aktivierungsenergien, deren Höhe entscheidend durch die Oberflächenbeschaffenheit des Materials bestimmt wird. So katalysieren einerseits Metalle wie z.B. Eisen, Nickel und Kupfer die Dissoziation des $H_2$-Moleküls, während andererseits adsorbierte Oberflächenschichten von Sauerstoff, Kohlenstoff oder Schwefel die Oberflächenvalenzen der Metalle absättigen, so dass die Chemisorption von Wasserstoff erschwert, wenn nicht sogar völlig verhindert wird. Die Aktivierung der Oberflächen von Wasserstoff-Speichermaterialien, d.h. die Beseitigung hemmender Oberflächenschichten (vornehmlich Oxidschichten), die Katalyse der Wasserstoff-Dissoziation und des Durchtritts durch die Oberfläche, sind daher u.a. von entscheidender Bedeutung für die Verwendung bestimmter Metalle oder Legierungen als Wasserstoff-Speichermaterialien.

Aus der Praxis sind zahlreiche Methoden der Aktivierung der Oberflächen von Wasserstoff-Speichermaterialien bekannt, z.B. die Aktivierung durch zyklische Be- und Entladung mit Wasserstoff. Diese von J.J. Reilly und R.H. Wiswall angewandte Methode für die Beladung von Vanadin (Vanadium) (Inorg. Chem. 9 (1970), 1968), Magnesium, der Magnesium-Kupfer-Verbindung ($Mg_2Cu$) und der Magnesium-Nickel-Verbindung ($Mg_2Ni$) ("The Reaction of Hydrogen with Alloys of Magnesium and Copper", Inorg. Chem. 6 (1967) 2220 und
"The Reaction of Hydrogen with Alloys of Magnesium and
Nickel and the Formation of $Mg_2NiH_4$", Inorg. Chem. 7 (1968)
2254) besteht darin, die Metalle und Legierungen im Vakuum
bei 300 bis 450°C auszugasen, dann bei dieser Temperatur
Wasserstoff mit einem Druck von 7 bis 25 bar auf die Proben
zu geben und diese so auf Raumtemperatur abkühlen zu lassen.
Wird dieses Verfahren einige Male wiederholt, erhält man ein
hochreaktives Metallpulver, welches jedoch bei Raumtemperatur durch den Luftsauerstoff sofort wieder desaktiviert wird.

Auch das zur Zeit einzige wirtschaftlich relevante $H_2$-
Speichermaterial FeTi wird durch zyklische Be- und Entladung aktiviert (J.J. Reilly und R.H. Wiswall, Inorg.
Chem. 13, 218 (1974). Hierbei wird sehr reines zonengeschmolzenes Ausgangsmaterial benutzt, welches unter atmosphärischer Luft bis zu einer Partikelgrösse von ca. 1,5 mm
pulverisiert wird. Das so vorbehandelte Probenmaterial wird
zwecks Ausgasung im Vakuum (keine Druckangabe) auf 400 bis
500°C erhitzt und bei dieser Temperatur ca. 30 min mit
Wasserstoff bei einem Druck von 7 bar belastet. Danach
wird die Probe wieder evakuiert, auf Raumtemperatur abgekühlt und Wasserstoff mit einem Druck von 65 bar zugegeben.

Das FeTi muss als Pulver eingesetzt werden, denn ein Hemmnis für eine gute Reaktionskinetik, d.h. schnelles Be- und Entladen mit Wasserstoff, stellt die Diffusion des Wasserstoffs im "Innern" des FeTi dar. So benötigt der Wasserstoff bei Raumtemperatur für eine mittlere Strecke von d = 1 /um (10 /um) eine Diffusionszeit t von ca. $10^3$ sec ($10^5$ sec) (Diffusionskoeffizient bei 293 K : D = 1,8 · $10^{-12}$ $cm^2$/sec, E. Wenzl, "Wasserstoff in Metallen: Herausragende Eigenschaften und Beispiele für deren Nutzung", Berichte der KFA-Jülich Nr. 1640, IFF Jül-1640, Januar 1980 (ISSN-0366-0885) und "FeTi und Li-Hydrides: Properties and Applications for Hydrogen Generation and Storage", J. of the Less-Common Metals, 74 (1980), 351 bis 361). Diese Diffusionszeiten zeigen, dass es wichtig ist, mit einem FeTi-Granulat zu beginnen, wobei typische technisch relevante Korngrössen bei ca. 0,1 bis 1 mm liegen.

Die Einlagerung von Wasserstoff im FeTi-Wirtsgitter bewirkt zunächst an der Oberfläche der Körner eine Gitteraufweitung, wodurch elastische Spannungen und schliesslich Risse entstehen. Die Rissbildung verkleinert einerseits die Diffusionswege und damit die Zeiten für Be- und Entladung und stellt andererseits dem Wasserstoff neue saubere Oberflächen zur Verfügung. Mit fortlaufender Hydrierung verstärkt sich die Rissbildung zum Teil aufgrund der frei wirkenden Reaktionswärme und zum Teil durch Phasenumwandlungen, die in Abhängigkeit von der Temperatur und/oder vom Wasserstoffgehalt durchlaufen werden. Dieser Teil der Aktivierung, die "in situ" Pulverisierung des Granulats, ist nach fünf bis zehn Hydrierzyklen abgeschlossen und es liegt dann ein FeTi-Pulver mit einer konstanten Korngrößenverteilung von einigen /um bis 25 /um vor, wobei das Maximum im Bereich von 8 bis 12 /um liegt. Die Oberfläche des aktivierten Pulvers wurde zu 0,2 bis 0,5 $m^2$/g bestimmt (E. Wenzl, "Wasserstoff in Metallen ..." und J.J. Reilly, J.R. Johnson "Proceedings of the ERDA Contractors' Review Meeting on Chemical Energy Storage und Hydrogen Energy Systems", 129 bis 136, Airlie House, Airlie, Virginia USA, 8.-9. Nov. 1976 und J.J. Reilly, Z. Physik.Chem.N.F. 117, 155 (1979).

Nach einer von A. Küssner, Ber. Bunsenges. Phys. Chem. 66, 675 (1962); H. Brodowsky und E. Wicke, Engelhard Ing. Techn. Bull. 7, 41 (1966) sowie P. Leonhardt, Dissertation Münster 1975, angewandten Methode, bei welcher Palladium (Pd)-Mohr als Katalysator für die Wasserstoffübertragung verwendet wird, hat sich elektrolytisch abgeschiedenes Pd-Mohr als Wasserstoff-Übertragungskatalysator bei den verschiedensten Metallen und Legierungen bewährt. Hierbei wird das Material elektrolytisch bei einer Stromdichte von 4 A/$cm^2$ und einer Stromflußzeit von weniger als 0,5 sec mit einer dünnen Pd-Mohrschicht überzogen. Als Elektrolyt dient eine gesättigte Lösung von Pd-Nitrat Pd(NO$_3$)$_2$, in Salpetersäure.

Die Methode der Aktivierung durch Pd-Mohr ist jedoch bei Metallen mit besonders fest haftenden Oxidschichten, wie z.B. Vanadin-Eisen-Legierungen, nicht immer zuverlässig. Solche Legierungen werden mit einer Pd-Mohrschicht im Vakuum bei ca. 600° C getempert. Die Wasserstoffaufnahme erfolgt beim Abkühlen in einer Wasserstoffatmosphäre. Die Reaktivität der so behandelten Proben lässt sich durch thermisches Zyklisieren (Be- und Entladen mit Wasserstoff im Temperaturbereich zwischen 25° bis 600° C) noch erheblich steigern. Die relativ gute Wasserstoff-Übertragungseigenschaft dieser Methode beruht darauf, dass einerseits vom Palladium atomarer Wasserstoff auf das Metall übertragen wird und andererseits durch die Wärmebehandlung die hemmende Oxidschicht, zumindest an einigen Stellen, durch Legierungsbildung des Palladiums mit dem Metall abgebaut wird.

Die bisher zuverlässigste und beste, aber zugleich aufwendigste und teuerste Methode der Aktivierung besteht darin, die Metallproben im Ultra-Hoch-Vakuum (UHV) auszuheizen und auf die Oberfläche einen Palladium-Film aufzudampfen (N. Boes und H. Züchner, Z. Naturforsch. 31a, 754 [1976]). Hierbei wird durch das Ausheizen unter UHV-Bedingungen eine sehr saubere Metalloberfläche erzeugt, die frei von hemmenden Verunreinigungsschichten (z.B. Sauerstoff) ist, so dass derartig behandelte Metallproben unter Gleichgewichtsbedingungen und nahezu ohne kinetische Hemmungen

- 7 -

mit Wasserstoff aus der Gasphase reagieren (N. Boes und H. Züchner, Surface Technology 7, 401 [1978] und M.A. Pick, J.W. Davenport, M. Strongin, G.J. Dienes, Phys. Rev-Lett. 43, 286 [1979]). Weitere grosse Vorteile der Aufdampfschichten bestehen darin, dass die Proben bei Raumtemperatur an Luft gehandhabt werden können, ohne dass, auch nach wochenlangem Lagern in normaler Atmosphäre, eine Desaktivierung eintritt, und dass relativ unreiner Wasserstoff verwendet werden kann, da die Palladium-Aufdampfschicht nur für Wasserstoff durchlässig ist.

Bei einer anderen von T. Schober und A. Carl in Less Comm.-Met. 63, 53 (1979) beschriebenen Methode der Oberflächenaktivierung wird durch Punktschweissen (ca. 50 Schweißstellen pro $cm^2$) eine dünne Palladiumfolie (ca. 25 /um) auf die Oberfläche des zu hydrierenden Materials aufgebracht. Auch hier wird an den Schweißstellen durch die Legierungsbildung von Palladium mit dem Metall die hemmende Oxidschicht zerstört. Die Effektivität dieser Methode ist aber zweifelhaft, weil für Vanadin Beladungsbedingungen von ca. 150 bis 200° C und 6oo bar Wasserstoffdruck vorherrschen müssen, welche ebenfalls weit oberhalb des thermodynamischen Gleichgewichts liegen.

Schliesslich wird bei einer von P.D. Goodell, G.D. Sandrock und E.C. Huston in "Microstructure and Hydriding Studies of $AB_5$ Hydrogen Storage Compounds", Sandia National Laboratories Report 79-7095 (1979) beschriebenen Methode der chemischen Abscheidung von Palladium, eine Palladinisierung von Hydrid-Speichermaterial durch reduktive Abscheidung von Palladium erzielt. Die abgeschiedene Palladiumschicht bringt jedoch keine Verbesserung bei der Aktivierung, weil dabei die Oxidschichten nicht entfernt werden.

Der normale Betrieb eines Wasserstoffspeichers besteht im zyklischen Be- und Entladen mit Wasserstoff. Hierbei lässt es sich nicht vermeiden dass bei jeder Neubeladung mit Wasserstoff (in Abhängigkeit von der Reinheit des Wasserstoffs) gewisse Verunreinigungen an Sauerstoff $(O_2)$, Wasser $(H_2O)$ und Kohlenmonoxid (CO) in den Wasserstoffspeicher gelangen. Grosse Mengen von Sauerstoff an der Oberfläche (ca. 15 bis 20 Monolagen) werden innerhalb von nur einer Minute adsorbiert, s. G.D. Sandrock und P.D. Goodell in "Surface Poisoning of $LaNi_5$, FeTi and (Fe,Mn) Ti by $O_2$, CO and $H_2O$", J. of the Less-Common Metals, 73 (1980) S. 161-168 und "Metallurgical Studies of Hydrogen Storage Alloys", final report DOE/CS/ENL-51 174, April 1980, U.S. Department of Energy. Die Adsorption von $H_2O$ an frisch aktivierten FeTi-Oberflächen ist ähnlich, jedoch dauert hier der Vorgang mehrere Stunden.

In weiteren Schritten reagiert dann der adsorbierte Sauerstoff mit Titan aber auch in gewissem Umfang mit Eisen und bildet dabei sehr komplexe Oxide, die zum einen nicht in der Lage sind, das $H_2$-Molekül katalytisch zu spalten und zum andern die Wasserstoffpermeation durch die Oberfläche zu verhindern. Wasser verhält sich ähnlich; unterschiedlich ist, dass das $H_2O$-Molekül gespalten wird und so Oberflächenoxide und/oder Hydroxyde bildet. Grundsätzlich unterschiedlich ist die Vergiftung durch CO; dieses wird innerhalb einer sehr kurzen Zeit (ca. 1 min) in nur einer Monolage an der Oberfläche durch Chemisorption gebunden, ohne dass eine weitere Reaktion erfolgt. Dieses Verhalten erklärt, dass eine sehr viel geringere Menge von CO zu einer völligen Desaktivierung der Oberfläche führt.

Der Oberflächenteil einer Probe, der z.B. in oxidischer Form vorliegt, ist für die Wasserstoffspeicherung unwiderruflich verloren. Dies macht deutlich, dass die Verwendung von unbehandelten FeTi als Wasserstoff-Speichermaterial hinsichtlich der extremen (unter dem Gesichtspunkt einer großtechnischen Anwendung) Aktivierungs- und Reaktivierungsbedingungen sowie der sehr schnellen und leichten Desaktivierung durch Luftsauerstoff, $H_2O$ und CO sehr problematisch ist.

Dies bedeutet, dass FeTi als Wasserstoff-Speichermaterial nur im Labormaßstab brauchbar ist, wenn zur Wiederbeladung höchst reiner Wasserstoff zur Verfügung steht. Es ist damit zu rechnen, dass bei Einsatz von technischem Wasserstoff (99,5%) schon nach wenigen Zyklen die Oberfläche so vergiftet ist, dass innerhalb von einer halben Stunde kaum noch eine nennenswerte Reaktion mit $H_2$ zu beobachten ist. Die beste und sicherste Methode zur Erleichterung der Aktivierung und Verhinderung der Vergiftung – Ausheizen unter UHV-Bedingungen und Aufdampfen einer dünnen Pd-Schicht – scheidet aus, weil sie einerseits zu teuer und andererseits im großtechnischen Maßstab mit pulverförmigen Materialien nur schwer zu realisieren ist. Die Wirksamkeit der elektrolytischen Abscheidung von Pd-Mohr ohne nachfolgende Wärmebehandlung, die großtechnisch nur schwer und unter erheblichem Kostenaufwand handhabbar ist, ist fraglich, weil die passivierenden Oberflächenschichten hierbei nicht beseitigt werden. Ebenfalls scheidet die Methode aus, eine dünne Pd-Folie durch Punktschweissen aufzubringen.

Vergleichend ist festzustellen, dass alle bekannten Methoden mehr oder weniger wirksam die Erst-Aktivierung des FeTi begünstigen, aber alle Methoden mit Ausnahme von Pd-Aufdampfschichten beim Kontakt mit gasförmigen Verunreinigungen ihre katalytische Wirksamkeit verlieren. Das heisst, dass nur Material mit Pd-Aufdampfschichten an der Luft handhabbar ist, ohne dass eine nachfolgende Reaktivierung erforderlich wird. Aus Kostengründen scheidet diese Methode jedoch ebenfalls aus.

Davon ausgehend ist es Aufgabe der Erfindung, ein Verfahren zu finden, mit welchem die Probleme eines FeTi-Einsatzes als technisches Speichermaterial für die Wasserstoffspeicherung beseitigt werden, so dass das FeTi-Material ohne weitere Aktivierung mit Wasserstoff beladbar und an Luft aufbewahrbar ist. Eine zeitlich unbegrenzte zyklische Be- und Entladung mit Wasserstoff sollte unter relativ milden Bedingungen realisierbar sein bzw. erfolgen.

Die gestellte Aufgabe wird erfindungsgemäss durch die kennzeichnenden Merkmale von Anspruch 1 gelöst.

Weitere vorteilhafte Ausführungsmerkmale ergeben sich aus den Unteransprüchen.

Der Vorteil der Erfindung besteht darin, dass in einem zweistufigen Verfahren zunächst die Oxidhaut auf dem FeTi-Material abgebeizt (entpassiviert) und anschliessend durch Ionentausch eine dünne Palladium-Schicht auf die entpassivierte Oberfläche aufgebracht wird. Das solchermaßen behandelte FeTi-Material ist gegen Luft unempfindlich, benötigt keine weitere Aktivierung und nimmt bereits bei Raumtemperatur sehr leicht $H_2$ auf.

Das Verfahren ist mit gleichem Erfolg, sowohl bei inaktivem wie auch bei mehrfach zyklisiertem FeTi-Pulver, welches dadurch seine minimale Korngrösse erreicht hat, anwendbar. Da der Beschichtungsprozess auf dem Ionentauschverfahren beruht, werden nur sehr geringe Pd-Schichtdicken von < 0,01 /um erzielt, wodurch die Beschichtung sehr preiswert wird; z.B. ergeben sich bei einer Schichtdicke des Palladiums von 0,01 /um und FeTi-Pulver von ca. 1 mm Korngrösse Kosten von ca. 0,70 DM/kg FeTi.

Durch das erfindungsgemässe Verfahren wird es ermöglicht, $H_2$-Speicherbehälter wesentlich kostengünstiger auszulegen, weil der Wasserstoff unter relativ milden Bedingungen aufgenommen und abgegeben werden kann.

Da die Beschichtung eine Passivierung des FeTi-Materials an Luft verhindert, wird die Handhabung des Speichermaterials wesentlich erleichtert, insbesondere, wenn sehr feine Pulver verwendet werden, welche bei der $H_2$-Beladung nicht weiter zerfallen können. Ebenso ist $H_2$ mit geringerer Reinheit zur Beladung verwendbar.

Im folgenden ist ein Ausführungsbeispiel des Beschichtungsverfahrens beschrieben:

FeTi-Pulver (51,5% Ti, 45,4% Fe, 1,5% Mn, 1% O, 0,1% C, 0,5% Al) mit einer Korngrösse von ca. 1 mm wird in dünner Schüttung auf einem Kunststoffsieb in ca. 0,005%ige verdünnte Flußsäure (HF) getaucht, wobei das Sieb ca. 1 min bewegt wird, bis an den FeTi-Körnern eine $H_2$-Entwicklung sichtbar wird. Anschliessend wird 0,1 Gew.-% Pd, bezogen auf das FeTi, in Form einer Palladiumchlorid-Lösung

(PdCl$_2$) in die Flußsäure gegeben. Nach ca. einer weiteren Minute Bewegung wird das FeTi aus der Lösung entfernt, in Azeton gespült und anschliessend an Luft getrocknet.

9. Aug. 1983
Kr/Ht.

0103736

DORNIER SYSTEM GMBH

7990 Friedrichshafen

Reg. S 430

P a t e n t a n s p r ü c h e

1. Verfahren zur Beschichtung von Wasserstoff-Speichermaterial mit Palladium, dadurch gekennzeichnet, dass
als Wasserstoff-Speichermaterial Legierungen mit Eisen
und Titan bzw. mit Titan als Hauptbestandteil verwendet werden und dass das Speichermaterial an seiner Oberfläche zunächst entpassiviert und anschliessend auf der
entpassivierten Oberfläche durch Ionentausch eine dünne
Palladiumschicht aufgebracht wird.

2. Verfahren nach Anspruch 1, dadurch gekennzeichnet, dass
zur Entpassivierung stark verdünnte Flußsäure-Lösung
verwendet wird.

3. Verfahren nach den Ansprüchen 1 und 2, dadurch gekennzeichnet, dass die Palladium-Beschichtung im Entpassivierungsbad mit Ionentausch durchgeführt wird.

4. Verfahren nach Anspruch 1, dadurch gekennzeichnet, dass
die Materialien als inaktives Pulver eingesetzt werden.

5. Verfahren nach Anspruch 1, dadurch gekennzeichnet, dass das Wasserstoff-Speichermaterial als zyklisiertes Hydrid eingesetzt wird.

Europäisches
Patentamt

**EUROPÄISCHER RECHERCHENBERICHT**

Nummer der Anmeldung

| | EINSCHLÄGIGE DOKUMENTE | | EP 83107931.4 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE - A1 - 3 142 353 (JAPAN METALS & CHEMICALS CO., LTD., NIHON SHINKU GIJUTSU K.K., SHINKU YAKIN K.K.) (19-08-1982) <br> * 2. Absatz der Beschreibung * <br> -- | 1 | C 23 C 3/00 <br> C 22 C 38/14 <br> C 23 F 1/00 <br> C 23 F 17/00 <br> B 22 F 1/02 |
| Y | EP - A1 - 0 040 092 (PERMELEX ELECTRODE LTD.) <br> * Beispiel 5; Ansprüche 1-3, 6-8 * <br> -- | 1-4 | B 32 B 15/02 |
| Y | SOVIET INVENTIONS ILLUSTRATED, Sektion Ch, Woche E 46, 5. Januar 1983 <br><br> DERWENT PUBLICATIONS LTD., London M 14 <br><br> * SU-897 895 (RUSKOL YU S) (15-01-1982) * <br> -- | 1,2 | |
| Y,D | INORGANIC CHEMISTRY, Vol. 13, 1974, Januar-Juni <br><br> J.J. REILLY and R.H. WISWALL, JR.: "Formation and Properties of Iron Titanium Hydride" <br><br> * Seiten 218-222 * <br> ---- | 1,5 | **RECHERCHIERTE SACHGEBIETE (Int. Cl. ³)** <br><br> C 23 C <br> C 22 C <br> C 23 F <br> B 22 F <br> B 32 B |

Der vorliegende Recherchenbericht wurde für alle Patentansprüche erstellt

| Recherchenort <br> WIEN | Abschlußdatum der Recherche <br> 14-11-1983 | Prüfer <br> SLAMA |
|---|---|---|